# EUROPEAN PATENT APPLICATION

(11) **EP 1 757 661 A1**
(43) Date of publication of application: **28.02.2007**
(21) Application number: 06017583.3
(22) Date of filing: 23.08.2006
(51) Int. Cl.: C09B 67/00, C09B 69/04, G11B 7/247, G11B 7/249

(54) **Dye material, optical recording medium using the same, and method of manufacturing the optical recording medium**

(30) Priority: 23.08.2005 JP 2005241793
(71) Applicant: TDK Corporation, Tokyo 103-8272 (JP)
(72) Inventor: Shinkai, Masahiro, Tokyo 103-8272 (JP); Tanabe, Junji, Tokyo 103-8272 (JP); Tsukamoto, Shuji, Tokyo 103-8272 (JP); Horai, Takashi, Tokyo 103-8272 (JP); Take, Hiroshi, Tokyo 103-8272 (JP)
(74) Representative: Grünecker, Kinkeldey, Stockmair & Schwanhäusser Anwaltssozietät

(57) **Abstract**

It is an object of the present invention to provide a dye material which can be employed in short-wavelength optical recording media, while being excellent in solubility to solvents. The dye material in accordance with a preferred embodiment of the present invention contains a cyanine compound and an azo compound. The cyanine compound contains at least a trimethinecyanine compound in which an aromatic structure including two nitrogen-containing heterocyclic rings is combined to a trimethine group. At least one of the nitrogen-containing heterocyclic rings includes a benzyl group which may have a substituent, while at least one of them includes an organic group having a carbon number of 2 to 30 substituted by a nitrogen atom. The azo compound contains at least a chelate compound of a compound containing an azo group and a metal.

## Description

### BACKGROUND OF THE INVENTION

### Field of the Invention

The present invention relates to a dye material, an optical recording medium using the same, and a method of manufacturing the optical recording medium.

### Related Background Art

Optical recording media is irradiated with a laser to a recording layer, and record information according to changes in the form, domain, phase, and the like of the recording layer. Known as such an optical recording medium is a disk-shaped optical recording medium in which a recording layer containing an organic dye is formed on a substrate. Optical recording media provided with a recording layer containing an organic dye can perform recording with a high sensitivity, and have been in widespread use as CD-R and DVD±R.

As organic dyes used in optical recording media, cyanine dyes have widely been studied heretofore, since they can deal with recording at high density and high speed. However, not a few of the cyanine dyes deteriorate greatly upon irradiation with light. Optical recording media using such a cyanine dye tend to be short of resistance to light. Known as an organic dye exhibiting light resistance superior to that of the cyanine dyes is a metal azo compound in which an azo compound is coordinated to a metal. However, this metal azo compound is disadvantageous in that its reflectance is low, so that a further improvement is necessary for the metal azo compound to be employed as a recording material for an optical recording medium.

Therefore, dye materials which combine a cyanine dye and a metal azo compound so as to compensate for the demerits mentioned above have been under consideration (see, for example, Japanese Patent No. 2925121, Japanese Patent Publication No. HEI 7-51682, and Japanese Patent Application Laid-Open No. HEI 8-156408).

### SUMMARY OF THE INVENTION

In general, an optical recording medium provided with a recording layer containing an organic dye is manufactured by dissolving an organic dye into an organic solvent, so as to yield a coating liquid, and applying the coating liquid onto a substrate by a coating method such as spin coating, so as to form (set) a recording layer containing the organic dye onto the substrate. From the viewpoint of forming a recording layer having a uniform thickness by favorably applying the coating liquid onto the substrate, it is desirable for the organic dye to exhibit a favorable solubility to the organic solvent in such a manufacturing method.

The dye material combining the cyanine dye and metal azo compound mentioned above exhibits a certain degree of solubility to the solvent used in the coating liquid, but is demanded to further ameliorate the solubility in order to further improve its characteristics.

In recent years, there has been an increasing necessity for optical recording media to record data by a capacity greater than that conventionally available. For dealing with such large-capacity recording, the mainstream of optical recording media has rapidly been shifting from conventional CD-R (whose recording/reproducing wavelength ranges from 750 to 830 nm) to DVD±R (whose recording/reproducing wavelength ranges from 620 to 690 nm) having shortened the wavelength so as to enable data recording with a higher density. For a recording layer of such a short-wavelength optical recording medium, the use of the above-mentioned dye material combining the cyanine dye and metal azo compound has also been under consideration.

In general, the recording/reproducing wavelength of an optical recording medium using a predetermined organic dye in a recording layer varies greatly depending on the chemical structure of the organic dye. Many of the cyanine dyes and metal azo compounds having chemical structures adapted to deal with the shortening of wavelengths mentioned above exhibit low solubility to the organic solvent when forming the coating liquid. Even when once dissolved, many of them precipitate again in a relatively short time, which makes it hard to yield a stable solution. Therefore, the above-mentioned dye material tends to be hard to form a recording layer of an optical recording medium favorably.

In view of such circumstances, it is an object of the present invention to provide a dye material which can be employed in an optical recording medium usable in short recording/reproducing wavelengths, while being excellent in solubility to solvents. It is another object of the present invention to provide an optical recording medium using this dye material and a method of manufacturing the optical recording medium.

For achieving the above-mentioned object, in one aspect, the present invention provides a dye material containing a cyanine compound and an azo compound; wherein the cyanine compound contains at least a compound represented by the following general formula (1); wherein the azo compound contains at least a chelate compound of a compound represented by the following general formula (2) and a metal; and wherein the cyanine compound is contained by 30 to 90 mass % of the total of the cyanine compound and azo compound:

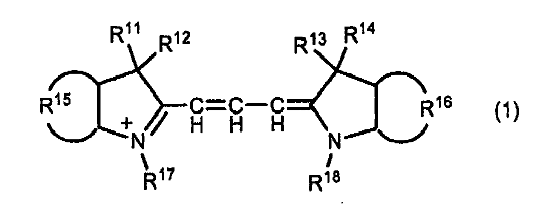

R²¹-N=N-R²² (2)

where, in the formula (1), R¹¹, R¹², R¹³, and R¹⁴ are each independently a group represented by the following general formula (3) or an alkyl group having a carbon number of 1 to 4; R¹⁵ and R¹⁶ are each independently an atom group constituting a benzene ring which may have a substituent or a naphthalene ring which may have a substituent; R¹⁷ and R¹⁸ are each independently an organic group having a carbon number of 1 to 30; at least one of R¹¹, R¹², R¹³, and R¹⁴ is a group represented by the following general formula (3); at least one of R¹⁷ and R¹⁸ is an organic group having a carbon number of 2 to 30; and carbons in at least one of a set of R¹¹ and R¹² and a set of R¹³ and R¹⁴ may be combined to each other so as to form a 3- to 6-membered ring: 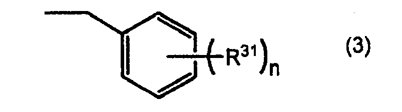 where, in the formula (3), R³¹ is a hydroxy group, a cyano group, a halogen atom, a nitro group, an alkoxy group having a carbon number of 1 to 4, or a halogen-substituted alkoxy group having a carbon number of 1 to 4; and n is an integer of 0 to 5; and, when n is 2 or greater, a plurality of R³¹ may be the same or different from each other; where, in the formula (2), R²¹ and R²² are each independently an aromatic ring which may have a substituent; and at least one of R²¹ and R²² is an aromatic ring having a substituent adapted to be coordinated to a metal atom or a nitrogen-containing heterocyclic aromatic ring having a nitrogen atom adapted to be coordinated to a metal atom.

The above-mentioned cyanine compound and azo compound having specific structures constituting the dye material of the present invention exhibit an extremely favorable solubility to a solvent when preparing a coating liquid for forming a recording layer. This dye material can form a recording layer suitable for a short recording/reproducing wavelength on the order of 620 to 690 nm. Therefore, such a dye material can yield an optical recording medium which is employable in short-wavelength recording/reproducing, while being provided with a recording layer having an excellent characteristic such as a thickness more uniform than that conventionally available.

For stably taking out reproducing signals, it is also an important characteristic for an optical recording medium to minimize the time-wise fluctuation (jitter) in the reproduction signals. In this respect, the dye material of the present invention having the above-mentioned structure is effective in that it can form a recording layer having a sufficiently small jitter. It is also excellent in resistance to light in that changes in jitter are small, and so forth, thus exhibiting a very high stability.

More preferably, in the compound represented by the general formula (1) in the above-mentioned dye material of the present invention, at least one of R¹⁷ and R¹⁸ is an isoamyl group, while the other is an alkyl group having a carbon number of 1 to 5. This can provide a dye material which exhibits a better solubility to solvents.

It will be further preferred if the dye material of the present invention contains at least a chelate compound represented by the following general formula (4) as the azo compound. The combination of the above-mentioned cyanine compound and this azo compound yields a dye material which is particularly suitable for short-wavelength recording/reproducing while being further better in solubility to solvents.

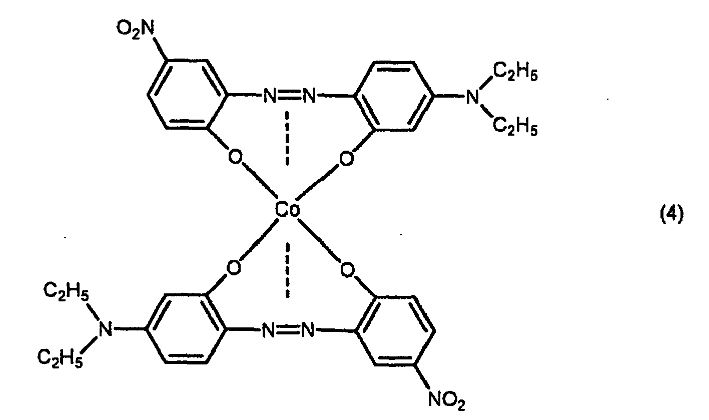

More specifically, it will be preferred in particular in the dye material of the present invention if the cyanine compound contains at least a compound represented by the following general formula (5), while the azo compound contains at least a chelate compound represented by the following general formula (4). This can yield a dye material which is particularly excellent in the above-mentioned effect. 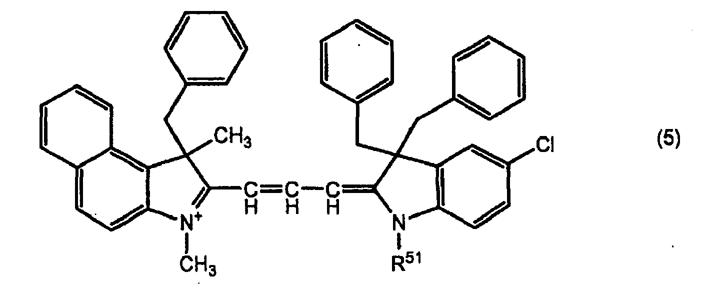 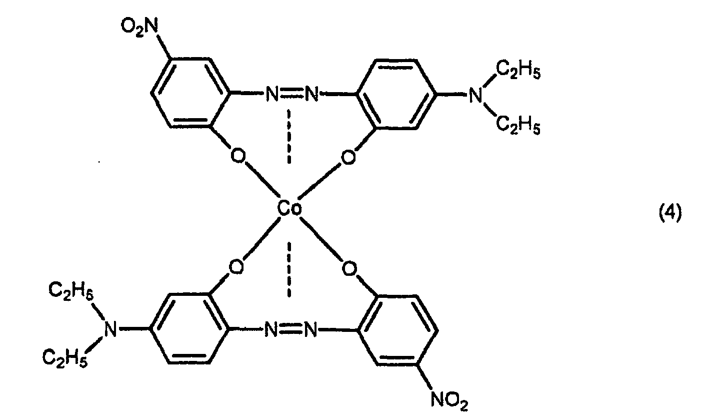 In the formula (5), R⁵¹ is a branched alkyl group having a carbon number of at least 4.

More preferably, such a dye material contains at least a compound represented by the above-mentioned general formula (5) in which R⁵¹ is an isoamyl group. Such a dye material is further better in solubility to solvents.

Preferably, the dye material of the present invention is one in which 10 to 100 mass % of the cyanine compound is a compound represented by the above-mentioned general formula (1). This yields a better solubility to solvents and an extremely excellent resistance to light.

In another aspect, the present invention provides a method of manufacturing an optical recording medium, the method comprising the step of applying a coating liquid containing the dye material of the present invention and tetrafluoropropanol (TFP) onto a substrate. The dye material of the present invention is particularly easy to dissolve in TFP. Therefore, using the coating liquid containing the dye material of the present invention and TFP in the manufacturing method of the present invention can manufacture an optical recording medium which is provided with a recording layer having a uniform thickness and exhibits an excellent characteristic.

In still another aspect, the present invention provides an optical recording medium which suitably employs the dye material of the present invention, the optical recording medium comprising a substrate and a recording layer formed on the substrate, the recording layer containing the dye material of the present invention. The optical recording medium of the present invention contains the dye material of the present invention in the recording layer, and thus is provided with the recording layer having a uniform thickness and an excellent characteristic, while being suitable for short recording/reproducing wavelengths.

### BRIEF DESCRIPTION OF THE DRAWINGS

Fig. 1 is a view schematically showing a cross-sectional structure of an optical recording medium manufactured by a manufacturing method in accordance with an embodiment; and
Fig. 2 is a view showing a cross-sectional structure of an optical recording medium provided with a recording layer on one side of a substrate.

### DESCRIPTION OF THE PREFERRED EMBODIMENTS

In the following, preferred embodiments of the present invention will be explained with reference to the drawings if necessary.

### Dye material

First, a dye material in accordance with a preferred embodiment will be explained. The dye material in accordance with this embodiment contains a cyanine compound and an azo compound, the cyanine compound containing at least a compound represented by the above-mentioned general formula (1), the azo compound containing at least a chelate compound of a compound represented by the above-mentioned general formula (2) and a metal.

In the compound represented by the above-mentioned general formula (1), examples of substituents in a benzene ring or naphthalene ring expressed by R¹⁵ and R¹⁶ include halogen groups such as fluorine, chlorine, bromine, and iodine; alkyl groups such as methyl, ethyl, propyl, isopropyl, butyl, secondary butyl, tertiary butyl, isobutyl, amyl, isoamyl, tertiary amyl, hexyl, cyclohexyl, heptyl, isoheptyl, tertiary heptyl, n-octyl, isooctyl, tertiary octyl, 2-ethylhexyl, and trifluoromethyl groups; aryl groups such as phenyl, naphthyl, 2-methylphenyl, 3-methylphenyl, 4-methylphenyl, 4-vinylphenyl, and 3-isopropylphenyl groups; alkoxy groups such as methoxy, ethoxy, propoxy, isopropoxy, butoxy, secondary butoxy, and tertiary butoxy groups; alkylthio groups such as methylthio, ethylthio, propylthio, isopropylthio, butylthio, secondary butylthio, and tertiary butylthio groups; and nitro, cyano, and hydroxyl groups.

Among the groups expressed by R¹¹ to R¹⁴, examples of alkyl groups having a carbon number of 1 to 4 include methyl, ethyl, propyl, isopropyl, butyl, secondary butyl, tertiary butyl, and isobutyl groups; examples of 3- to 6-membered rings which may be formed by combining at least one of a set of R¹¹ and R¹² and a set of R¹³ and R¹⁴ include cyclopropane-1,1-diyl, cyclobutane-1,1-diyl, 2,4-dimethylcyclobutane-1,1-diyl, 3-dimethylcyclobutane-1,1-diyl, cyclopentane-1,1-diyl, cyclohexane-1,1-diyl, tetrahydropyran-4,4-diyl, thiane-4,4-diyl, piperidine-4,4-diyl, N-substituted piperidine-4,4-diyl, morpholine-2,2-diyl, morpholine-3,3-diyl, N-substituted morpholine-2,2-diyl, and N-substituted morpholine-3,3-diyl; and examples of their N-substituents include the substituents expressed by R¹⁵ and R¹⁶ which may exist in a benzene ring or naphthalene ring.

At least one of the groups expressed by R¹¹ to R¹⁴ is a group represented by the above-mentioned general formula (3). In the group represented by R³¹ in the above-mentioned general formula (3), examples of the halogen atom include fluorine, chlorine, bromine, and iodine, whereas examples of the alkyl group having a carbon number of 1 to 4 include methyl, ethyl, propyl, isopropyl, butyl, secondary butyl, tertiary butyl, and isobutyl groups. Examples of the halogen-substituted alkyl group having a carbon number of 1 to 4 include chloromethyl, dichloromethyl, trichloromethyl, bromomethyl, dibromomethyl, tribromomethyl, fluoromethyl, difluoromethyl, trifluoromethyl, perfluoroethyl, perfluoropropyl, and perfluorobutyl groups, whereas examples of the alkoxy group having a carbon number of 1 to 4 include methoxy, ethoxy, propoxy, isopropoxy, butoxy, secondary butoxy, and tertiary butoxy groups. Examples of the halogen-substituted alkoxy group having a carbon number of 1 to 4 include chloromethyloxy, dichloromethyloxy, trichloromethyloxy, bromomethyloxy, dibromomethyloxy, tribromomethyloxy, fluoromethyloxy, difluoromethyloxy, trifluoromethyloxy, perfluoroethyloxy, perfluoropropyloxy, and perfluorobutyloxy groups.

Examples of the organic group having a carbon number of 1 to 30 expressed by R¹⁷ or R¹⁸ include alkyl groups such as methyl, ethyl, propyl, isopropyl, butyl, secondary butyl, tertiary butyl, isobutyl, amyl, isoamyl, tertiary amyl, hexyl, cyclohexyl, cyclohexylmethyl, 2-cyclohexylethyl, heptyl, isoheptyl, tertiary heptyl, n-octyl, isooctyl, tertiary octyl, 2-ethylhexyl, nonyl, isononyl, decyl, dodecyl, tridecyl, tetradecyl, pentadecyl, hexadecyl, heptadecyl, and octadecyl groups; alkenyl groups such as vinyl, 1-methylethenyl, 2-methylethenyl, propenyl, butenyl, isobutenyl, pentenyl, hexenyl, heptenyl, octenyl, decenyl, pentadecenyl, and 1-phenylpropene-3-yl groups; alkylaryl groups such as phenyl, naphthyl, 2-methylphenyl, 3-methylphenyl, 4-methylphenyl, 4-vinylphenyl, 3-isopropylphenyl, 4-isopropylphenyl, 4-butylphenyl, 4-isobutylphenyl, 4-tertiarybutylphenyl, 4-hexylphenyl, 4-cyclohexylphenyl, 4-octylphenyl, 4-(2-ethylhexyl)phenyl, 4-stearylphenyl, 2,3-dimethylphenyl, 2,4-dimethylphenyl, 2,5-dimethylphenyl, 2,6-dimethylphenyl, 3,4-dimethylphenyl, 3,5-dimethylphenyl, 2,4-ditertiarybutylphenyl, and cyclohexylphenyl groups; and arylalkyl groups such as benzyl, phenethyl, 2-phenylpropane-2-yl, diphenylmethyl, triphenylmethyl, styryl, and cinnamyl groups and those having ether or thioether bonds in these structures such as 2-methoxyethyl, 3-methoxypropyl, 4-methoxybutyl, 2-butoxyethyl, methoxyethoxyethyl, methoxyethoxyethoxyethyl, 3-methoxybutyl, 2-phenoxyethyl, 2-methylthioethyl, and 2-phenylthioethyl groups, for example. These groups may further be substituted by alkoxy groups, alkenyl groups, nitro groups, cyano groups, halogen atoms, and the like within such a range that the total carbon number does not exceed 30.

When both of the groups expressed by R¹⁷ and R¹⁸ are three-dimensionally small, it becomes easy for them to form a clathrate with organic matters such as organic solvents, whereby crystallization may be more likely to occur. This phenomenon occurs remarkably when both of R¹⁷ and R¹⁸ are methyl groups, for example. Therefore, at least one of R¹⁷ and R¹⁸ has a carbon number of at least 2.

When at least one of R¹⁷ and R¹⁸ is an excessively large group, however, absorbed light per mole may decrease, thereby affecting sensitivity. Therefore, it is preferred for R¹⁷ and R¹⁸ to be as small as possible as a cyanine compound for high-speed DVD-R From these viewpoints, a preferred combination of R¹⁷ and R¹⁸ is such that at least one of them is an isoamyl group while the other is an alkyl group having a carbon number of 1 to 5. This can keep the solvent clathrate mentioned above from crystallizing to such an extent that the productivity of the optical recording medium is not lowered thereby, and sufficiently restrain the sensitivity from deteriorating when R¹⁷ or R¹⁸ becomes greater. Preferred examples of the alkyl group having a carbon number of 1 to 5 combined with isoamyl include methyl, ethyl, propyl, isopropyl, butyl, secondary butyl, isobutyl, tertiary butyl, amyl, isoamyl, tertiary amyl, and 2-pentyl groups.

Specific examples of the compound represented by the above-mentioned general formula (1) in the dye material of this embodiment include the compounds represented by the following chemical formulas:

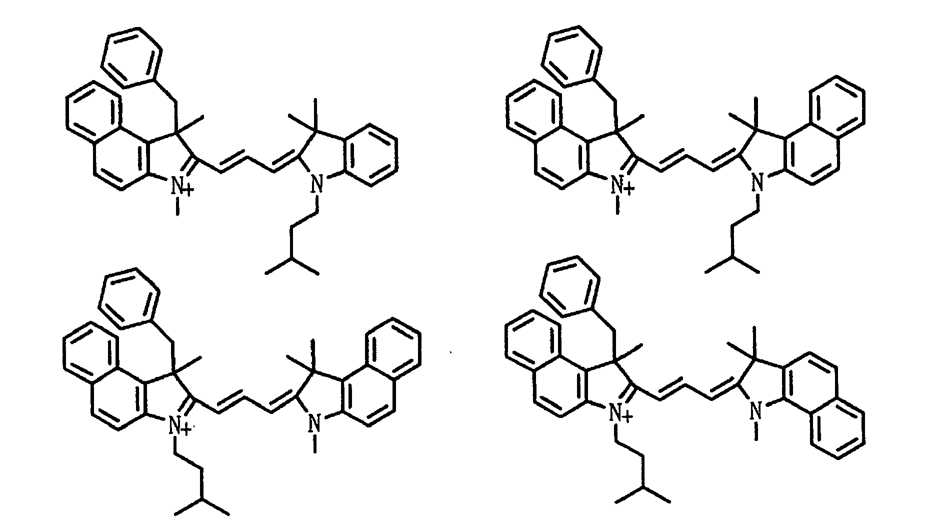

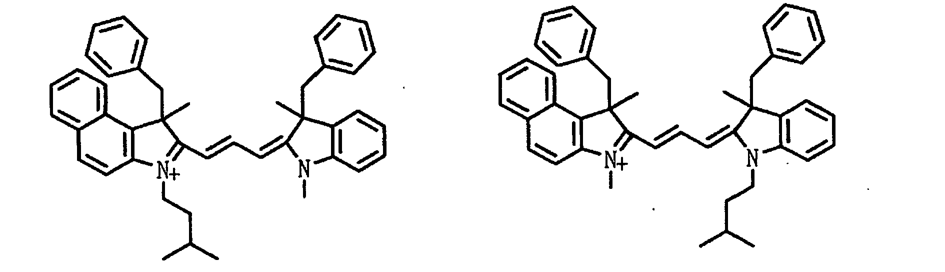

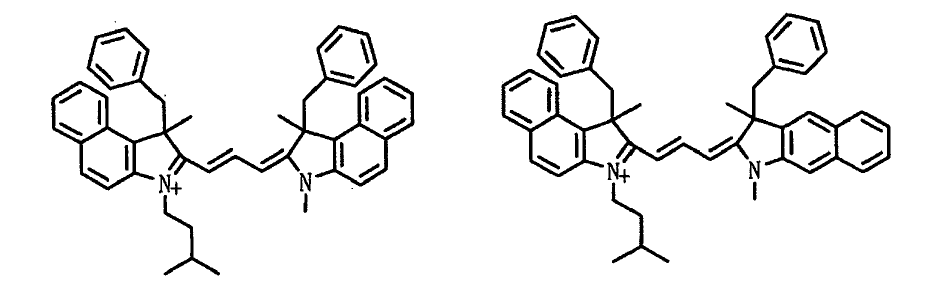

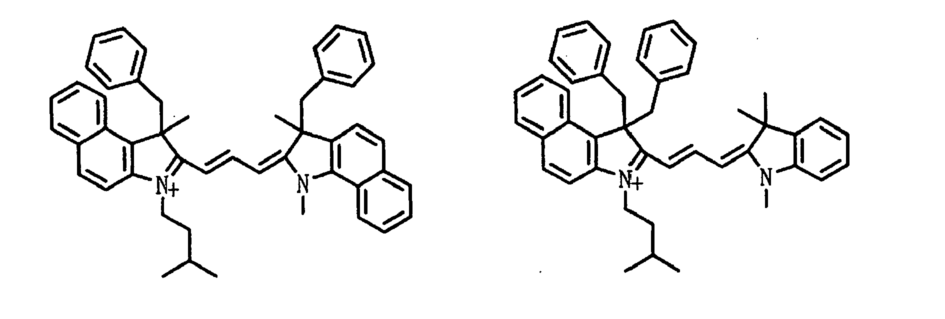

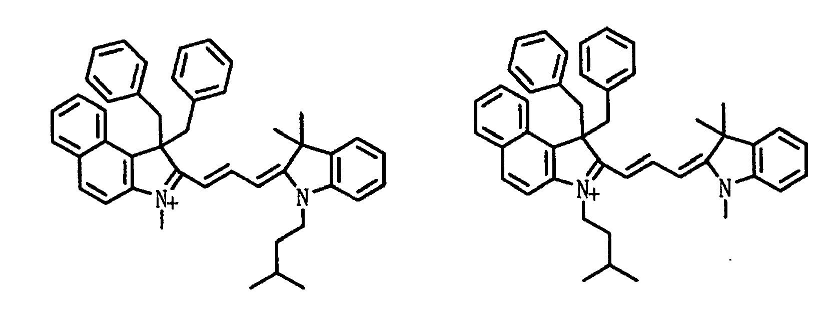

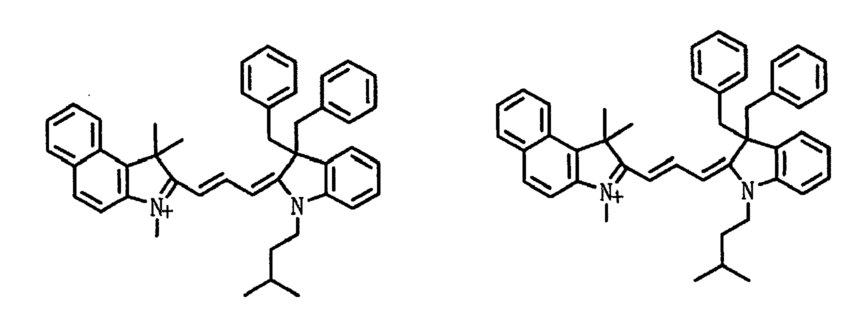

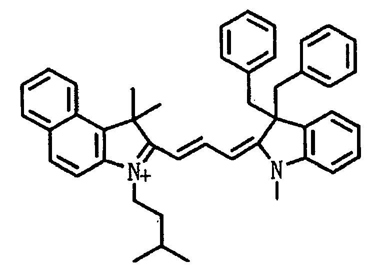

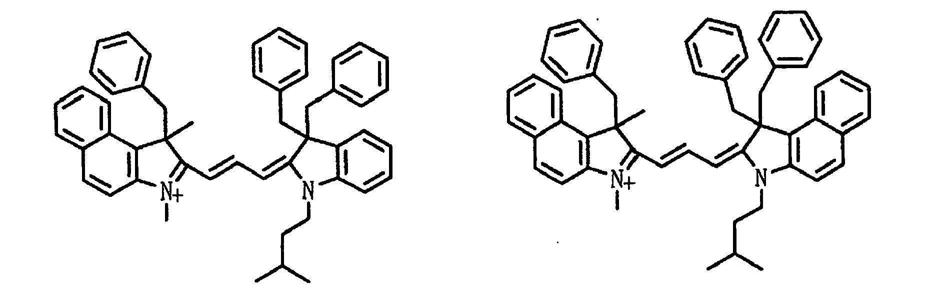

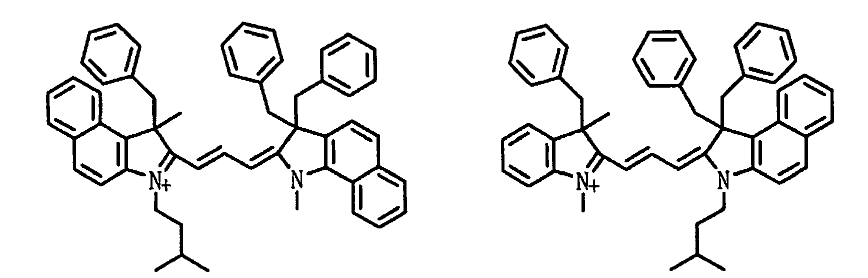

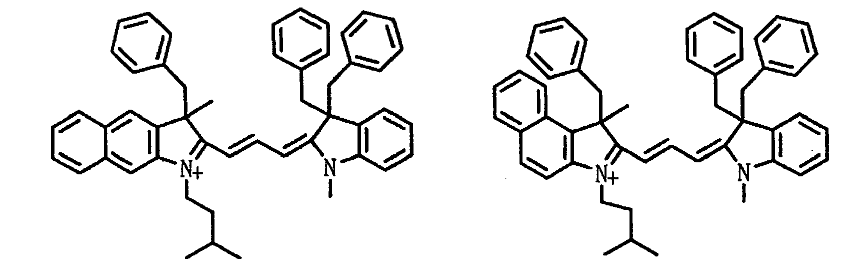

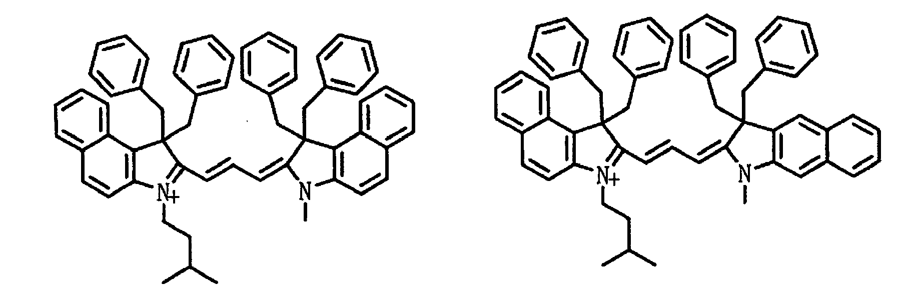

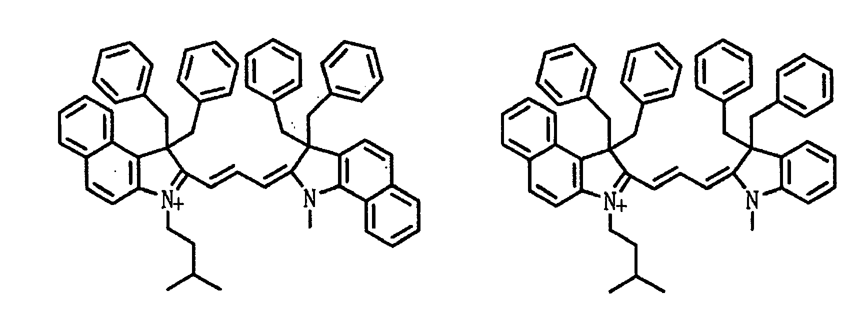

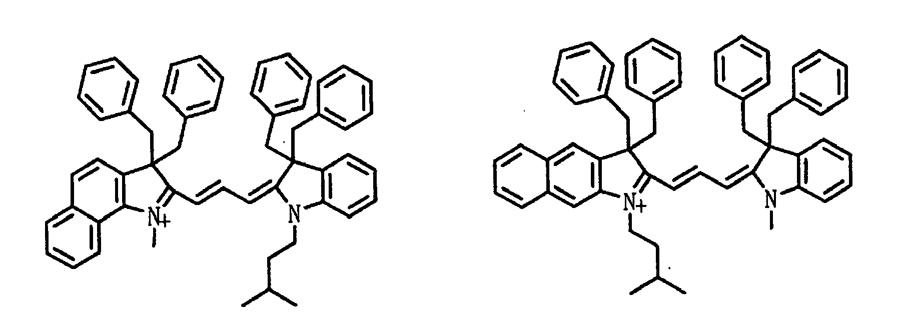

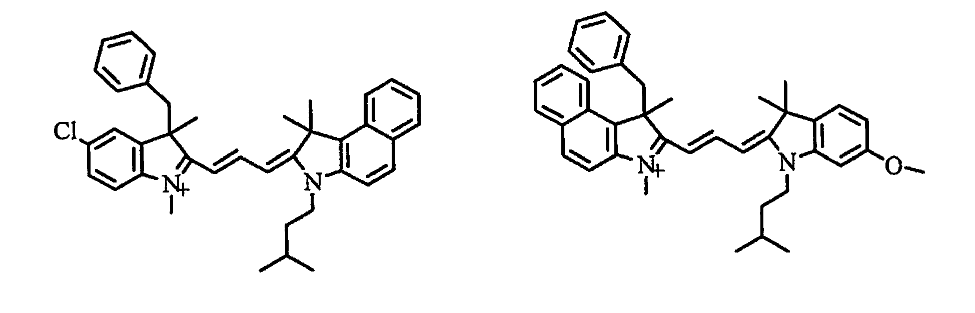

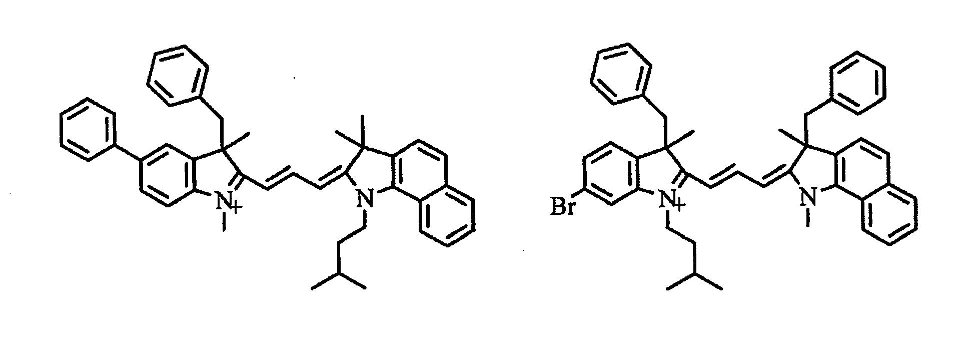

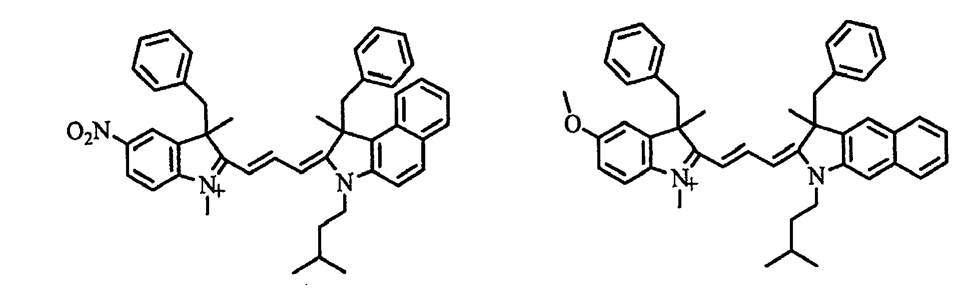

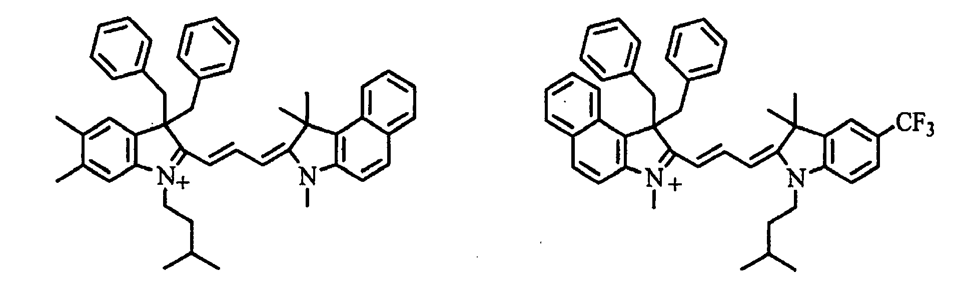

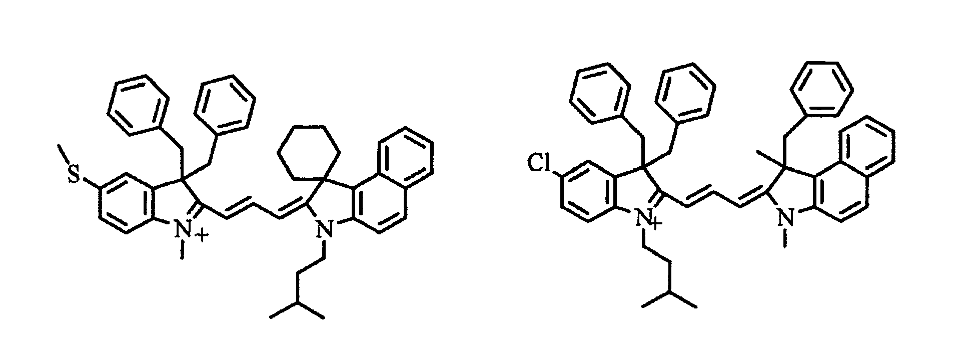

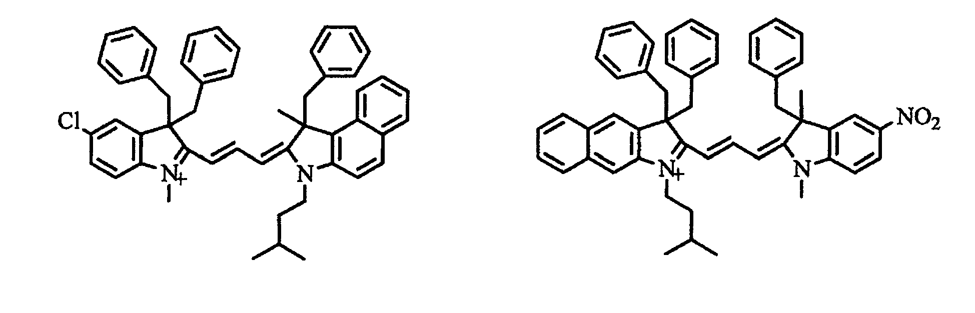

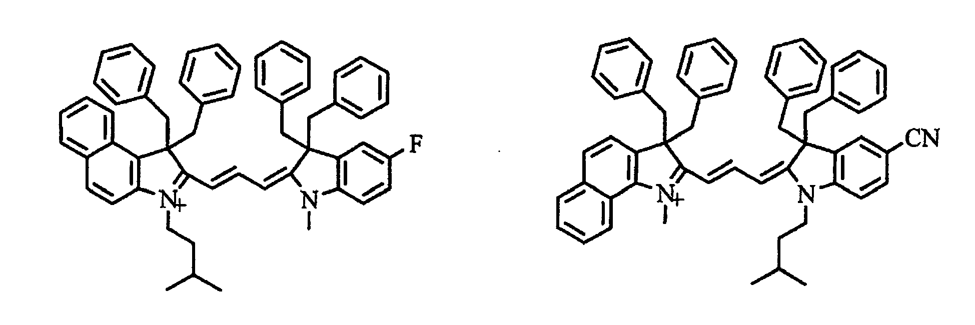

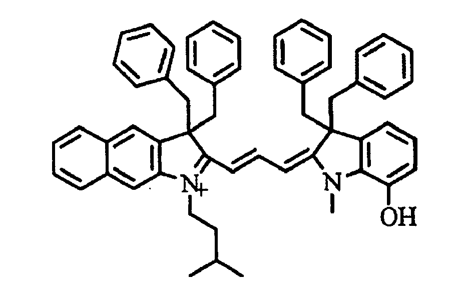

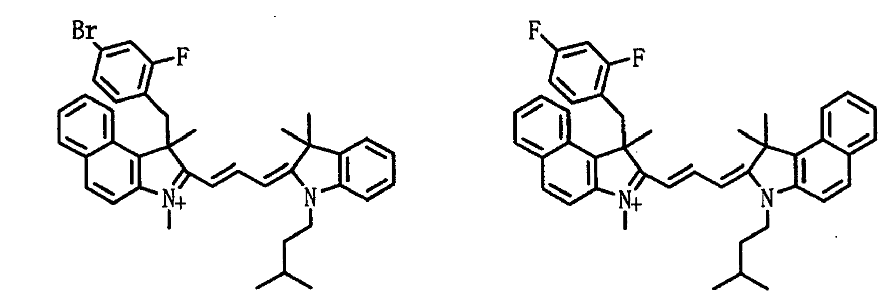

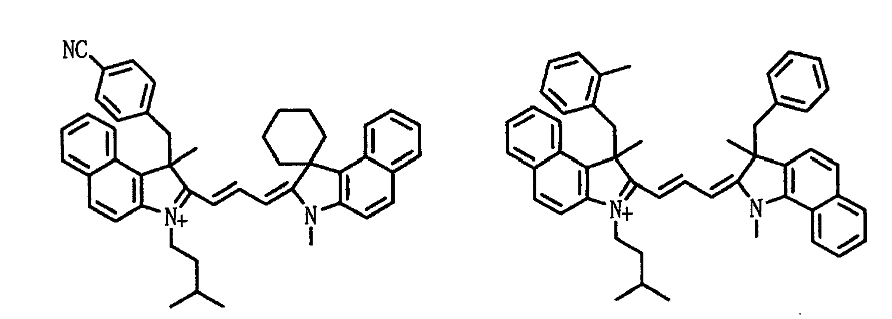

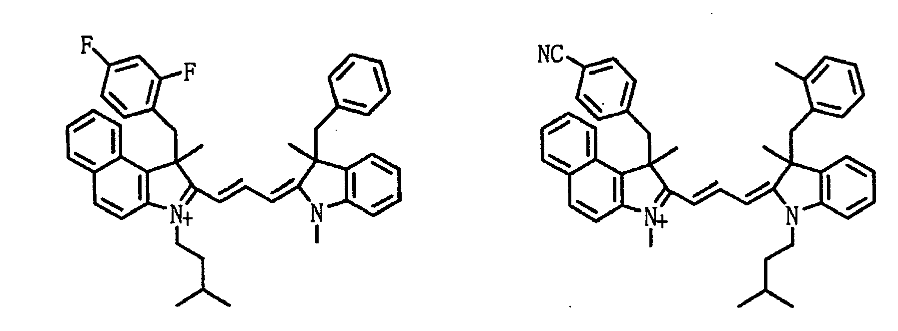

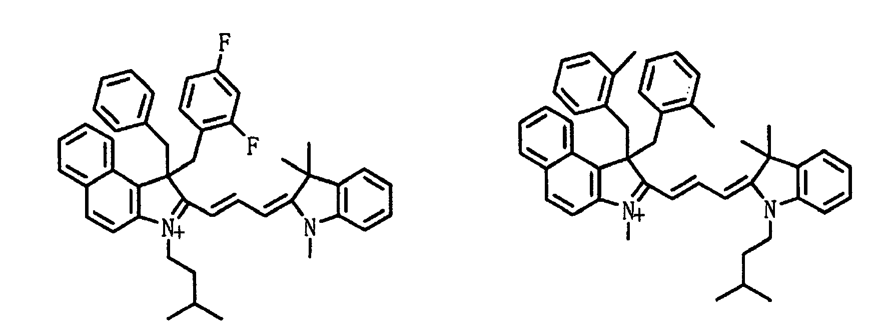

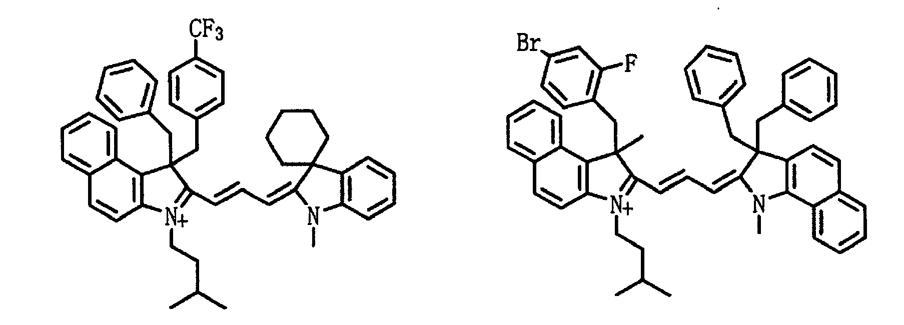

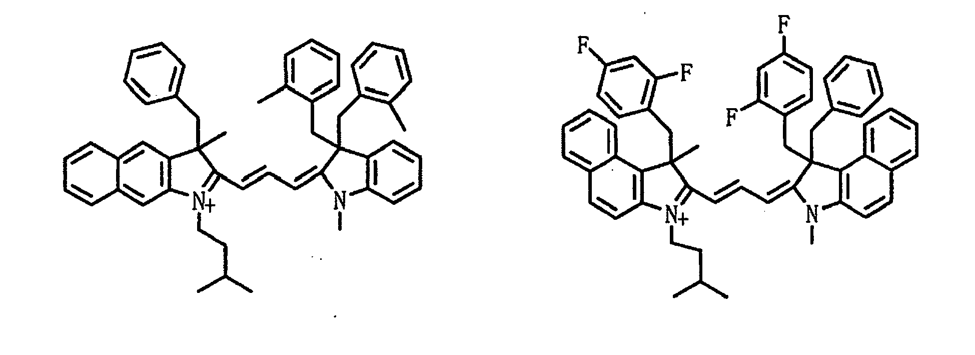

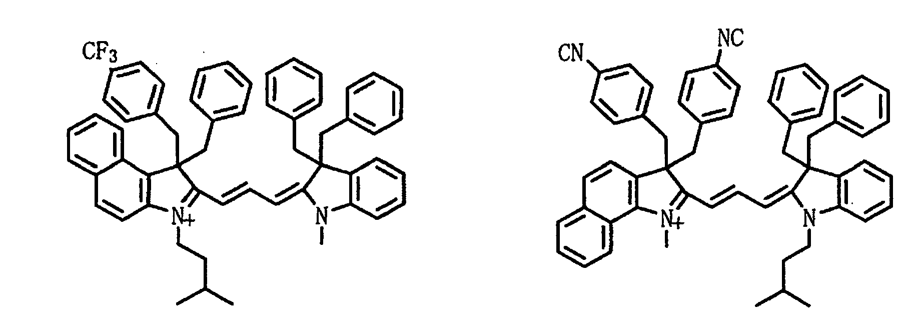

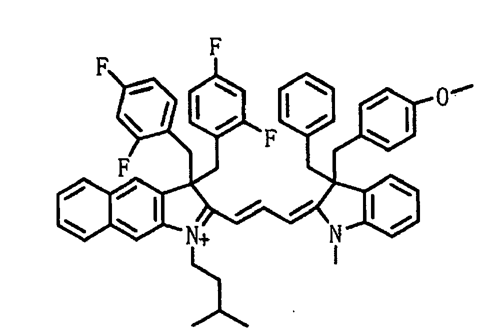

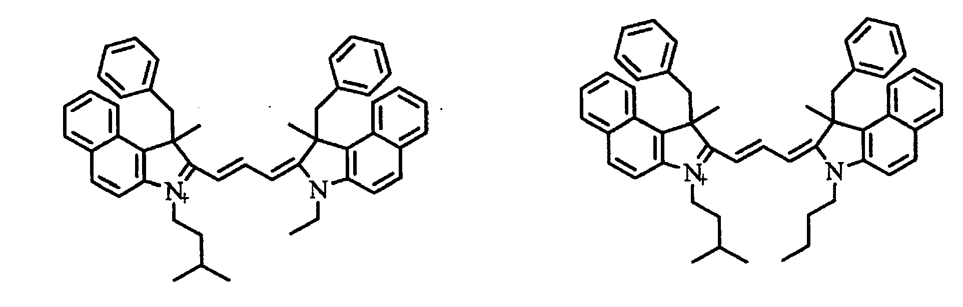

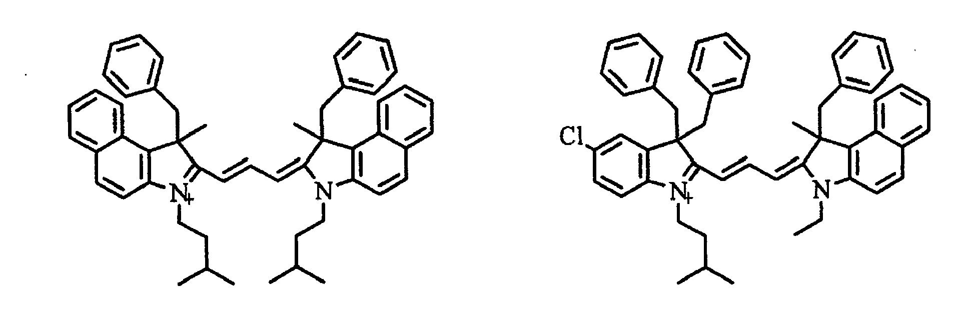

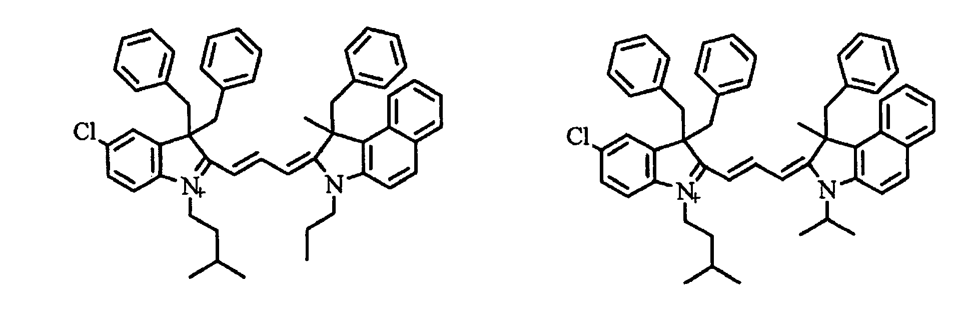

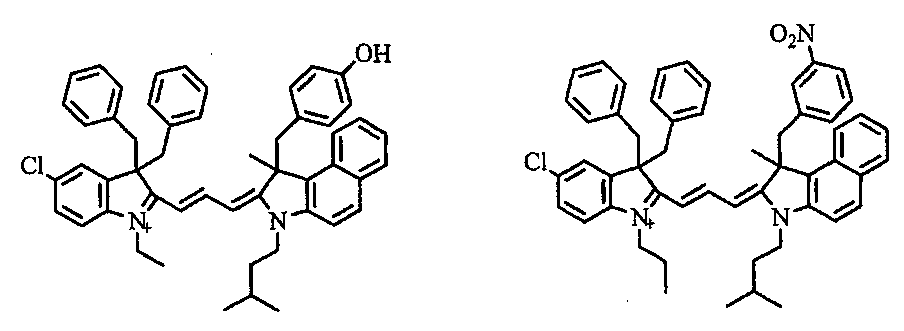

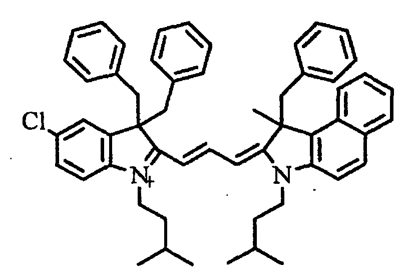

The cyanine compound represented by the above-mentioned general formula (1) in this embodiment can be manufactured by the following manufacturing method, for example. Namely, it can be obtained when two quaternary 2-methylindole salt derivatives, which are intermediates, are caused to react with a bridging agent such as N,N'-diphenylamidine. Here, the benzyl group which may have a substituent represented by the above-mentioned general formula (3) may be introduced in the process of yielding the quaternary 2-methylindole salt derivative, which is an intermediate. For example, it may be introduced when forming an indole ring by a 2-butanone derivative having a phenyl group with R³¹ at the 4-position by using an arylhydrazine derivative as a starting material, or by causing a methylbenzene halide derivative having R³¹ to react with the indole ring.

R¹⁷ or R¹⁸ may also be introduced by a halogen- or sulfonyloxy-substituted R¹⁷ or R¹⁸ which can react with NH in the arylamine derivative or indole ring. Here, examples of the halogen group include chlorine, bromine, and iodine, whereas examples of the sulfonyloxy group include phenylsulfonyloxy, 4-methylphenylsulfonyloxy, and 4-chlorophenylsulfonyloxy groups. The 2-butanone derivative having a phenyl group with the substituent R³¹ at the 4-position can easily be obtained by causing acetone to react with benzaldehyde having the substituent R³¹.

A specific method of manufacturing the cyanine compound represented by the above-mentioned general formula (1) includes a reaction path represented by the following expression. In the expression, R¹² to R¹⁸, R³¹, and n are defined as mentioned above, whereas Hal is a halogen atom. On the other hand, pAn^{m-} is an anion forming a salt with the cyanine compound, whereas its examples include azo compounds and counteranions which will be explained later.

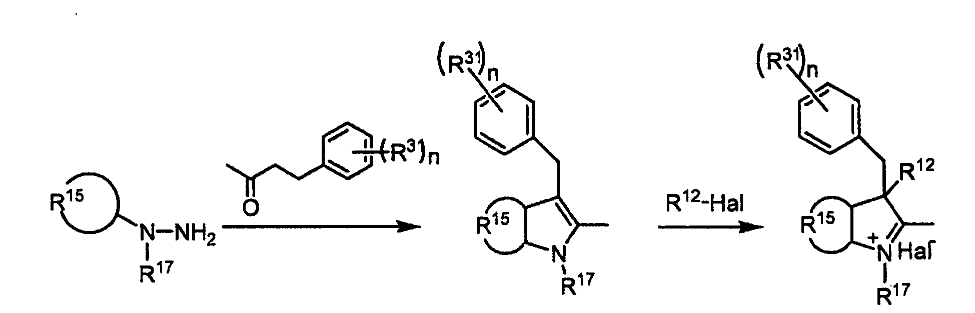

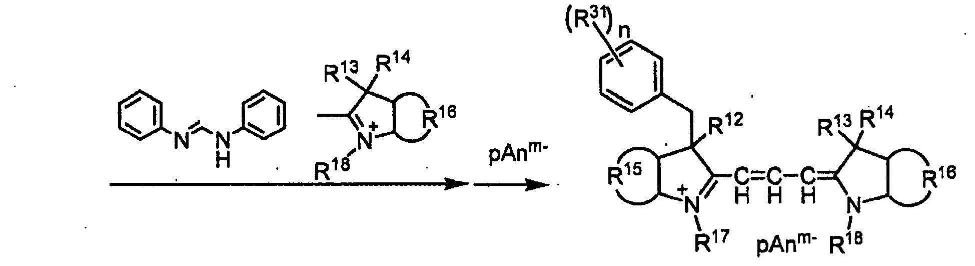

Preferred as the compound represented by the above-mentioned general formula (1) among those mentioned above is a compound represented by the above-mentioned general formula (5). In the compound represented by the general formula (5), R⁵¹ is a branched alkyl group having a carbon number of at least 4, examples of which include groups represented by the following chemical formulas (5a) to (5d).

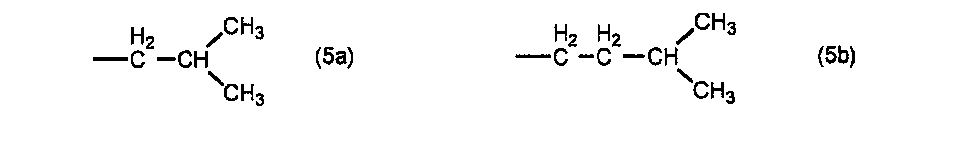

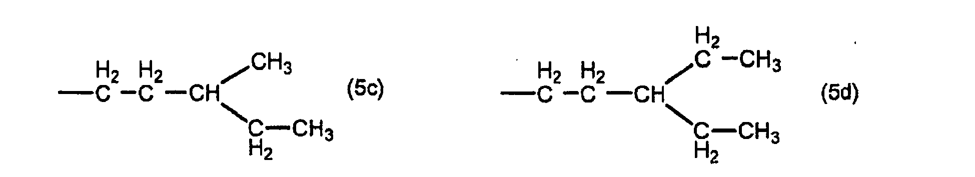

It will be preferred in particular if the compound represented by the following chemical formula (6), in which R⁵¹ in the above-mentioned general formula (5) is the isoamyl group represented by the above-mentioned chemical formula (5b), is contained as the cyanine compound.

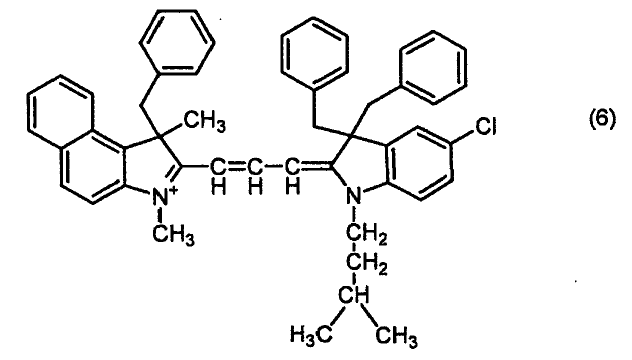

On the other hand, the dye material in accordance with this embodiment contains at least a chelate compound (metal azo compound) of the azo compound represented by the above-mentioned general formula (2) and a metal as an azo compound. This chelate compound is a metal chelate compound formed when an azo compound having an azo group substituted by an aryl group which may have a substituent is coordinated to a metal, and is also known as azo-based dye or azo-based colorant. Such a chelate compound can be synthesized by a known method (see, for example, Furukawa, Anal. Chim. Acta., 140, p. 289, 1982).

Here, the substituent adapted to be coordinated to a metal atom and the nitrogen atom adapted to be coordinated to a metal atom is preferably at a position adjacent to the position substituted by the azo group (e.g., the ortho position in the case of a benzene ring). The aromatic rings constituting R²¹ and R²² may be either monocyclic rings or polycyclic rings such as condensed polycyclic rings and connected polycyclic rings. Examples of such an aromatic ring include benzene, naphthalene, pyridine, thiazole, benzothiazole, oxazole, benzoxazole, quinoline, imidazole, pyrazine, and pyrrole rings. Among them, benzene, pyridine, quinoline, and thiazole rings are preferred in particular.

Examples of the substituent adapted to be coordinated to a metal atom include groups having active hydrogen. Examples of the group having active hydrogen include -OH, -SH, -NH₂, -COOH, -CONH₂, -SO₂NH₂, -SO₃H, and -NHSO₂CF₃. Among them, -OH is preferred in particular.

R²¹ and R²² may have other substituents in addition to those mentioned above. The substituents in R²¹ and R²² may be the same or different from each other. When they are different, it will be preferred if R²¹ has at least one species selected from the group consisting of nitro groups, halogen atoms (e.g., chlorine atom or bromine atom), carboxyl groups, sulfo groups, sulfamoyl groups, and alkyl groups (preferably those having a carbon number of 1 to 4, more preferably methyl group), while R²² has at least one species selected from the group consisting of amino groups (preferably dialkylamino groups having a total carbon number of 2 to 8, examples of which include dimethylamino, diethylamino, methylethylamino, methylpropylamino, dibutylamino, and hydroxyethylmethylamino groups), alkoxy groups (preferably having a carbon number of 1 to 4, an example of which is methoxy group), alkyl groups (preferably having a carbon number of 1 to 4, more preferably methyl group), aryl groups (preferably monocyclic ones, examples of which include phenyl and chlorophenyl groups), carboxyl groups, and sulfo groups. The substituent of R²¹ is preferably at the meta or para position with respect to the azo group, more preferably at the meta position.

The metal (center metal) constituting the chelate compound is preferably a transition metal such as Co, Mn, Ti, V, Ni, Cu, Zn, Mo, W, Ru, Fe, Pd, Pt, and Al. V, Mo, and W may be included as their oxide ions such as VO²⁺, VO³⁺, MoO²⁺, MoO³⁺, and WO³⁺. Among them, VO²⁺, VO³⁺, Co, Ni, and Cu are preferred in particular.

These chelate compounds usually form a coordinate bond to a metal by using the above-mentioned azo compound as a tridentate ligand. When the azo compound has a substituent with active hydrogen, the active hydrogen is usually desorbed, so as to yield the tridentate ligand.

In particular, it will be preferred if the azo compound contained in the dye material of this embodiment includes a metal azo complex anion such as the chelate compound (bis[2-[[4-(dimethylamino)-2-(hydroxy-KO) phenyl]azo-κN¹]-4-nitrophenolate(2-)-κO]cobalt(1-)) represented by the above-mentioned chemical formula (4). Containing such a compound as the azo compound yields an excellent resistance to light.

While the dye material of this embodiment contains the above-mentioned cyanine compound and azo compound, it will be preferred if these compounds form a salt in the dye material. Preferably, for example, the cyanine compound as a cation and the azo compound as an anion ionically combine together, so as to yield a salt-forming dye. Such a salt-forming dye can be expressed by the following general formula (7). In this formula, R⁵¹ is defined as mentioned above.

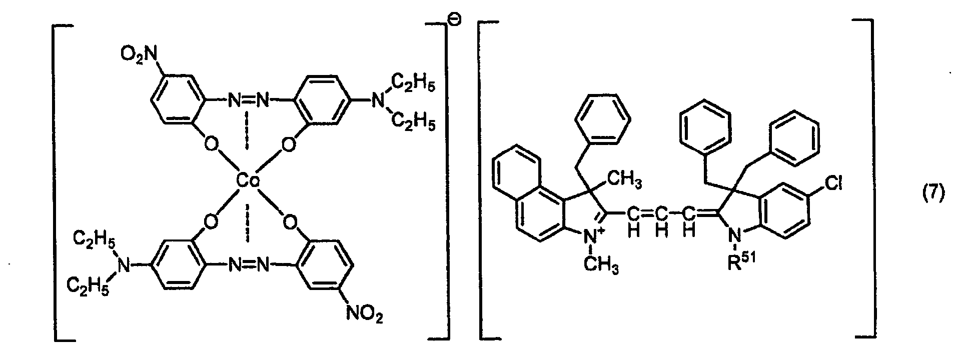

In the dye material, it is not necessary for all of the cyanine compound and azo compound to form the above-mentioned salt, whereas it will be sufficient if only a part of them form the salt. In the latter case, parts not forming the salt will form a salt with their corresponding counteranions or countercations. Specific examples of the counteranions include halide ions (Cl⁻, Br⁻, I⁻, etc.), ClO₄⁻, BF₄⁻, PF₆⁻, VO₃, VO₄³⁻, WO₄²⁻, CH₃SO₃⁻, CF₃COO⁻, HSO₄⁻, CF₃SO₃⁻, p-toluene sulfonate ion (PTS⁻), and p-trifluoromethylphenyl sulfonate ion (PFS⁻). Examples of the countercations include metal cations such as Na⁺, Li⁺, and K⁺, ammonium, and tetraalkylammonium.

The dye material of this embodiment may further contain a cyanine compound or azo compound other than the chelate compound of the compound represented by the above-mentioned general formula (1) or the compound represented by the above-mentioned general formula (2) and a metal as the cyanine compound or azo compound. The cyanine compounds and azo compounds used as dye materials in general can be employed without any restrictions in particular. The compound represented by the above-mentioned general formula (1) or the above-mentioned chelate compound contained in the dye material is not necessarily limited to a single species, but may be a combination of a plurality of species of compounds.

It will be preferred in the dye material of this embodiment if the cyanine compound and azo compound are compounded so as to satisfy the following conditions. Namely, the cyanine compound is preferably contained by 30 to 90 mass %, more preferably 40 to 80 mass %, with respect to the total of the cyanine compound and azo compound. When the cyanine content is less than 30 mass %, the jitter of the resulting optical recording medium tends to become disadvantageously large. When the content exceeds 90 mass %, on the other hand, the resistance to light tends to decrease.

Preferably 10 to 100 mass %, more preferably 15 to 100 mass %, of the cyanine compound contained in the dye material is at least the compound represented by the above-mentioned general formula (1). When the ratio of the compound represented by the above-mentioned general formula (1) in the cyanine compound is less than 10 mass %, the solubility of the dye material to the solvent tends to become insufficient. All of the cyanine compound may be the compound represented by the above-mentioned general formula (1), whereas the cost for manufacturing the optical recording medium can be cut down when other inexpensive cyanine compounds are combined therewith to such an extent that the solubility does not decrease.

The dye material of this embodiment may further contain dyes of species other than the above-mentioned cyanine compound and azo compound. Examples of the other dyes include aminium dyes, azo metal complex dyes, phthalocyanine dye, formazan dyes, rhodamine dyes, and triphenylmethane-based dyes. Preferably, they are contained to such an extent that characteristics such as the solubility of the dye material to the solvent and the jitter and light resistance of the resulting optical recording medium are not remarkably lowered thereby. Preferably, their amount is 40 parts by mass or less with respect to 100 parts by mass in total of the cyanine compound and azo compound, for example.

### Optical recording medium and a method of manufacturing the same

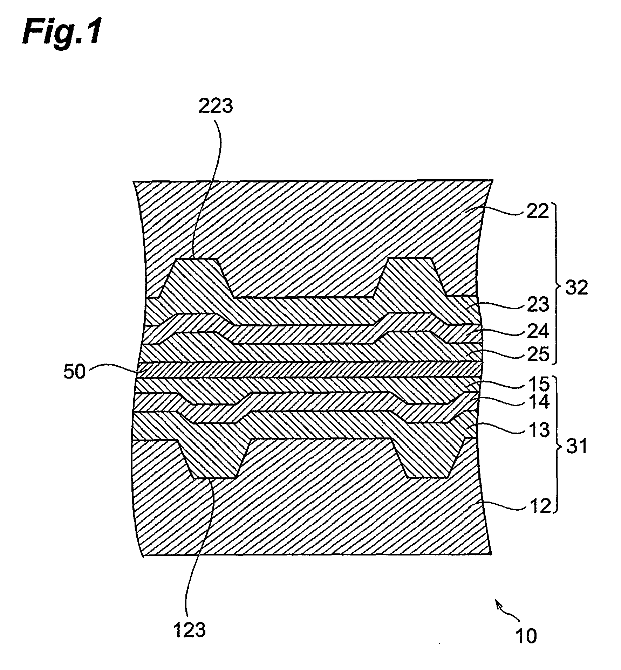

Preferred embodiments of an optical recording medium using the above-mentioned dye material and its manufacturing method will now be explained. Fig. 1 is a view schematically showing a cross-sectional structure of the optical recording medium in accordance with this embodiment. The optical recording medium 10 shown in Fig. 1 is a recordable optical recording compact disc conforming to the DVD standard, and enables recording/reproducing with light having a short wavelength in the vicinity of 620 to 690 nm.

The optical recording medium 10 has such a structure that a one-sided optical recording medium 31 comprising a substrate 12, a recording layer 13, a reflecting layer 14, and a protective layer 15 which are laminated in this order and a one-sided optical recording medium 32 comprising a substrate 22, a recording layer 23, a reflecting layer 24, and a protective layer 25 which are laminated in this order are bonded to each other with an adhesive layer 50 such that their respective protective layers 15, 25 oppose each other. Namely, the optical recording medium 1 has a structure in which the substrate 12, recording layer 13, reflecting layer 14, protective layer 15, adhesive layer 50, protective layer 25, reflecting layer 24, recording layer 23, and substrate 22 are successively laminated from the lower side of the drawing. In the substrates 12, 22, the surfaces opposing the recording layers 13, 23 are formed with gutter-like grooves 123, 223, respectively.

In the following, a method of manufacturing thus configured optical recording medium 10 will be explained. As mentioned above, the optical recording medium 10 is formed by bonding the one-sided optical recording media 31 and 32 to each other, whereas these one-sided optical recording media can be manufactured similarly. Here, a method of manufacturing the one-sided optical recording medium 31 will be explained by way of example.

First, when manufacturing the one-sided optical recording medium 31, the substrate 12 is prepared. The substrate 12 is formed like a disk having a diameter of 64 to 200 mm and a thickness of about 0.6 mm. For irradiating the recording layer 13 on the inner side of the substrate 12 with recording light and reproducing light at the time of writing and reading with respect to the optical recording medium 10, it will be preferred if the substrate 12 is substantially transparent to these kinds of light. More specifically, the substrate 12 preferably exhibits a transmittance of at least 88% with respect to the recording light and reproducing light. Preferred as a material for the substrate 12 satisfying such a condition is a resin or glass satisfying the above-mentioned condition concerning the transmittance. Preferred among them in particular are thermoplastic resins such as polycarbonate resins, acrylic resins, amorphous polyolefins, TPX, and polystyrene-based resins.

In the substrate 12, the surface opposing the recording layer 13 is formed with the gutter-like groove 123. The groove 123 is a continuous groove having a spiral form when the substrate is seen from thereabove. It will be preferred if the groove 123 has a depth of 60 to 200 nm, a width of 0.2 to 0.5 µm, and a groove pitch of 0.6 to 1.0 µm. Thus configured groove 123 can yield a favorable tracking signal without lowering the reflection level in the groove.

The groove 123 can be formed simultaneously when molding the substrate 12 by injection molding or the like with the above-mentioned resin. It may also be formed by manufacturing a flat substrate 12, then forming a resin layer having a recess to become the groove 123 by the 2P method or the like, and making a composite substrate of the substrate 12 and this resin layer.

Next, a coating liquid made by dissolving the dye material of the present invention set forth in the above-mentioned embodiment into a solvent is applied onto a surface formed with the groove 123 in the substrate 12, so as to form the recording layer 13. When forming the recording layer 13, a drying step of removing the solvent may be performed if necessary after applying the coating liquid. The coating liquid can be applied by spin coating, gravure coating, spray coating, dip coating, and the like. Preferred among them is spin coating which can easily perform coating with a uniform thickness.

The coating liquid used for forming the recording layer 13 is one obtained when dissolving a dye material in a solvent. Any solvent may be used as the solvent as long as it can favorably dissolve the dye material, whereas its preferred examples include halogenated alcohols, such as fluorinated alcohols in particular. Preferred among them as the solvent used in the coating liquid is tetrafluoropropanol (TFP), such as 2,2,3,3-tetrafluoro-1-propanol in particular. As the solvent, those mentioned above may be used singly or in combination with other solvents. An example of the combination of solvents is a combination of TFP and an aliphatic alcohol.

Preferably, the coating liquid is applied such that the recording layer 13 attains a thickness of 50 to 200 nm, more preferably 70 to 150 nm, after drying. When the thickness of the recording layer 13 is out of this range, the reflectance with respect to the reproducing light tends to decrease, thereby making it harder to effect favorable reproduction.

Thus formed recording layer 13 has a structure having removed the solvent from the coating liquid, and is mainly composed of the dye material of the present invention. The solvent such as TFP contained in the coating liquid may remain in the recording layer 13 by about 30 µg per the recording layer 13.

The extinction coefficient (the imaginary part k of the complex refractive index) of the recording layer 13 with respect to the recording light and reproducing light is preferably 0 to 0.20. When the extinction coefficient exceeds 0.20, a sufficient reflectance tends to be harder to attain. The refractive index (the real part n of the complex refractive index) of the recording layer 13 is preferably at least 1.8. When the refractive index is less than 1.8, the degree of modulation in signals tends to be small. Though not restricted in particular, the upper limit of refractive index is usually about 2.6 for convenience of synthesizing the organic dye.

The extinction coefficient and refractive index of the recording layer 13 can be determined according to the following procedure. First, a recording layer is provided by about 40 to 100 nm on a predetermined transparent substrate, so as to make a measurement sample, and then the reflectance through the substrate or from the recording layer side of the measurement sample is measured. In this case, the reflectance is measured by specular reflection (about 5°) using the wavelength of recording/reproducing light. Further, the transmittance of the sample is measured. From these measured values, the extinction coefficient and refractive index can be calculated, for example, according to the method described in Ishiguro Kozo, "Optics", Kyoritsu Zensho, pp. 168-178.

After the recording layer 13 is thus formed, the reflecting layer 14 is formed on a surface of the recording layer 13 which is on the side opposite from the substrate 12. The reflecting layer 14 can be formed, for example, by depositing a highly reflective metal or alloy by vapor deposition, sputtering, or the like. Examples of the metal and alloy for forming the reflecting layer 14 include gold (Au), copper (Cu), aluminum (Al), silver (Ag), and AgCu. Preferably, the reflecting layer 14 is formed such that its thickness becomes 50 to 120 nm.

Thereafter, a coating liquid for forming a protective layer containing a material such as UV-curable resin is applied onto the surface of reflecting layer 14 on the side opposite from the substrate 12, and the coated film is dried if necessary, so as to form a protective layer 15, thus yielding a one-sided optical recording medium 31. Thus formed protective layer 15 has a laminar or sheet-like form, for example, whereas its thickness is preferably 0.5 to 100 µm. The coating liquid for forming the protective layer can be applied by spin coating, gravure coating, spray coating, dip coating, and the like as in the case of forming the recording layer 13.

The one-sided optical recording medium 32 can be obtained as with the above-mentioned one-sided optical recording medium 31. Thus obtained two one-sided optical recording media 31, 32 are bonded to each other with a known adhesive such that their respective protective layers 15, 25 face each other. This yields the optical recording medium 10 in which the one-sided optical recording media 31 and 32 are bonded to each other with the adhesive layer 50.

A method of recording (writing) and reproducing (reading) data using thus obtained optical recording medium 10 will now be explained. Namely, when writing data, the optical recording medium 10 is irradiated with light (laser or the like) having a predetermined wavelength (e.g., 620 to 690 nm in the case of DVD±R) from the side of the substrate 12 or 22. Thus emitted light is transmitted through the substrate 12 or 22, so as to reach the recording layer 13 or 23, which heats the parts of recording layers 13, 23 irradiated with the light, thereby chemically or physically forming pits in these parts. Thus, data is written in the recording layers 13, 23.

When reproducing the data from the optical recording medium 10 having the data written therein, the optical recording medium 10 is irradiated from the substrate 12 or 22 side with light having the same wavelength as the light using recording. Thus emitted light reaches the recording layer 13, and is reflected thereby. Here, the reflectance varies between the part formed with the pits and the other part on the recording surfaces 13, 23, whereby the data written in the recording layers 13, 23 can be read out according to the difference in reflectance.

Though preferred embodiments of the optical recording medium and its manufacturing method are explained in the foregoing, the optical recording medium and method of manufacturing the same in accordance with the present invention are not limited to the above-mentioned embodiments as long as a recording layer is formed by using the dye material of the present invention. For example, the optical recording medium is not necessarily suitable for short wavelengths for DVD±R, but may be formed into a recording medium suitable for a different wavelength of light by appropriately adjusting the structure of dye, ingredients to be mixed, etc.

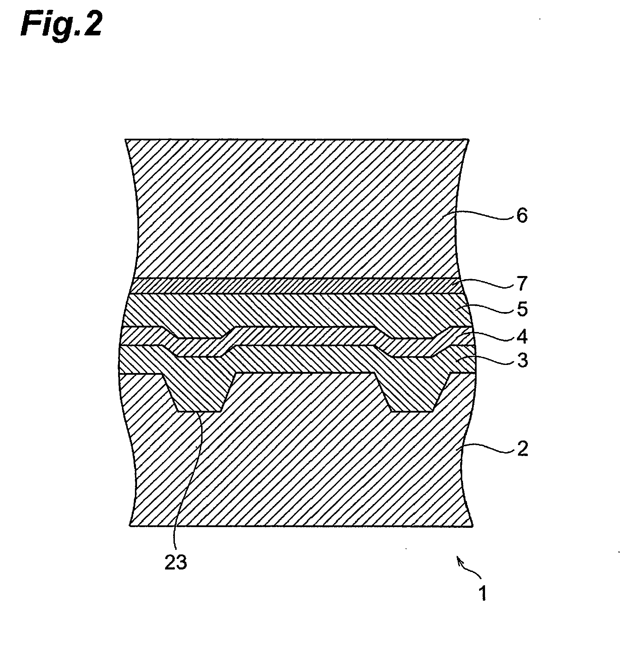

The optical recording medium is not required to be in the above-mentioned form of bonding two one-sided optical recording media to each other, but may be in the form of a one-sided optical recording medium alone. Fig. 2 is a view showing a cross-sectional structure of such a form of optical recording medium, i.e., a cross-sectional structure of an optical recording medium including a recording layer on one side of the substrate. The optical recording medium 1 shown in Fig. 2 has a structure in which a recording layer 3, a reflecting layer 4, a protective layer 5, an adhesive layer 7, and a dummy substrate 6 are laminated in this order on a substrate 2. In the substrate 2, the surface opposing the recording layer 3 is formed with a gutter-like groove 23.

Thus, in the optical recording medium 1, the dummy substrate 6 is bonded onto the protective layer 5 with the adhesive layer 7, whereby a sufficient strength is secured in the form of one-sided optical recording medium. Thus configured optical recording medium 1 can be formed by making a multilayer body comprising the substrate 2, recording layer 3, reflecting layer 4, and protective layer 5 as in the manufacture of the above-mentioned one-sided optical recording medium 31, and then bonding the dummy substrate 6 onto the protective layer 5 with the adhesive layer 7.

Each of the optical recording medium 1 or the one-sided recording media 31, 32 in the optical recording medium 10 may be provided with a plurality of recording layers instead of a single recording layer on a substrate. When a plurality of recording layers provided on the substrate contain different dyes in this case, information can be recorded/reproduced onto/from each recording layer by using a plurality of recording/reproducing light components having the same or different wavelengths, whereby recording by a greater capacity is possible. In this form of optical recording medium, reflecting films semitransparent to the recording/reproducing light components may be provided on the respective recording layers.

### Examples

In the following, the present invention will be explained in more detail with reference to examples, which do not restrict the present invention at all.

### Examples 1 to 12 and Comparative Examples 1 to 7

Preparation of a coating liquid
A cyanine compound and the azo compound represented by the above-mentioned chemical formula (1b) were dissolved in 2,2,3,3-tetrafluoropropanol (TFP), so as to prepare a coating liquid. As the cyanine compound, the cyanine compound (hereinafter referred to as "cyanine compound A") represented by the above-mentioned chemical formula (1c), a cyanine compound (hereinafter referred to as "cyanine compound B") in which the isoamyl group in the above-mentioned chemical formula (1c) was substituted by a methyl group, and a cyanine compound (hereinafter referred to as "cyanine compound C") in which the isoamyl group in the above-mentioned chemical formula (1c) was substituted by a propyl group were used in arbitrary combinations. The cyanine and azo compounds were compounded such that their contents in the total amount of the dye materials became the respective amounts shown in the following Table 1. The total content of the dye materials was set to 1.5 mass % in the total amount of the coating liquid.

Evaluation of solubility
First, to what extent the dye materials (the cyanine compounds A, B, and C and the azo compound) could dissolve in TFP in the above-mentioned "preparation of a coating light" was visually inspected. Table 1 lists thus obtained results. In Table 1, those in which the dye materials completely dissolved and did not precipitate again after being left for 48 hr are indicated by A, whereas those which partly dissolved but yielded a residue or those which once dissolved but precipitated again after being left for 48 hr are indicated by B.

Making of an optical recording medium
Thereafter, each of thus obtained coating liquids was applied by spin coating onto a polycarbonate resin substrate having a diameter of 120 mm and a thickness of 0.6 mm so as to yield a thickness of 140 nm, and then was dried. This formed a recording layer on the polycarbonate resin substrate. Subsequently, a reflecting layer made of Ag was formed by sputtering on the recording layer. The thickness of the reflecting layer was set to 100 nm. Next, a UV-curable acrylic resin was applied by spin coating onto the reflecting layer such as to yield a thickness of 5 µm, and then was cured upon irradiation with UV rays, so as to form a protective layer. Thereafter, a dummy substrate (a polycarbonate resin substrate having a thickness of 0.6 mm) was bonded onto the protective layer with an adhesive layer, so as to yield an optical recording medium having the structure shown in Fig. 2.

Light resistance test
Using DDU-1000 manufactured by Pulstec Industrial Co., Ltd., the recording layer of each of thus obtained optical recording media was irradiated with laser having a wavelength of 655 nm at a linear velocity of 28 m/sec, so as to form pits. Subsequently, each of the optical recording media formed with the pits was irradiated with a laser having a wavelength of 650 nm at a linear velocity of 3.5 m/sec, so as to effect reproduction, whereby jitter was measured. The optical recording medium after the jitter measurement was irradiated with xenon lamp light at 50,000 1x for 80 hr, and then was irradiated with a laser having a wavelength of 650 nm at a linear velocity of 3.5 m/sec, so as to effect reproduction, whereby jitter after the irradiation with light was measured. The difference (Δj) between the jitter after the irradiation with light and the jitter obtained in the optical recording medium after forming the pits was calculated as a value for evaluating the resistance to light. As the value of Δj is smaller, the change in jitter upon irradiation with light becomes smaller, thereby indicating a better resistance to light. Table 1 lists the respective values of Δj obtained in the optical recording media.

**TABLE 1**

| | Dye material composition | | | | Characteristic evaluation | |
|---|---|---|---|---|---|---|
| | Cyanine compound | | | Azo compound | Solubility | Δj |
| | A | B | C | | | |
| Comparative Example 1 | 10 | 0 | 0 | 90 | B | 1.0 |
| Comparative Example 2 | 28 | 0 | 0 | 72 | B | 1.2 |
| Example 1 | 30 | 0 | 0 | 70 | A | 1.2 |
| Example 2 | 35 | 0 | 0 | 65 | A | 1.3 |
| Example 3 | 50 | 0 | 0 | 50 | A | 1.5 |
| Example 4 | 70 | 0 | 0 | 30 | A | 1.7 |
| Example 5 | 85 | 0 | 0 | 15 | A | 1.9 |
| Example 6 | 90 | 0 | 0 | 10 | A | 2.0 |
| Comparative Example 3 | 92 | 0 | 0 | 8 | A | 4.9 |
| Comparative Example 4 | 95 | 0 | 0 | 5 | A | 5.8 |
| Example 7 | 15 | 15 | 0 | 70 | A | 1.2 |
| Example 8 | 25 | 25 | 0 | 50 | A | 1.7 |
| Example 9 | 45 | 45 | 0 | 10 | A | 2.0 |
| Example 10 | 15 | 45 | 0 | 40 | A | 1.8 |
| Example 11 | 25 | 45 | 0 | 30 | A | 1.5 |
| Example 12 | 45 | 0 | 45 | 10 | A | 1.9 |
| Comparative Example 5 | 0 | 45 | 0 | 55 | B | 1.7 |
| Comparative Example 6 | 0 | 90 | 0 | 10 | B | 2.1 |
| Comparative Example 7 | 0 | 0 | 70 | 30 | B | 1.9 |

Table 1 has verified that, in Examples 1 to 12 each using a dye material containing the compound (cyanine compound A) represented by the above-mentioned chemical formula (1c) as the cyanine compound and the compound represented by the above-mentioned general formula (1b) as the azo compound, the dye materials favorably dissolve in TFP acting as a solvent and do not precipitate again. It has also been seen that the optical recording medium of each example yields a small Δj value of 2.0 or less, thereby exhibiting an excellent resistance to light as well.

As in the foregoing, the present invention can provide a dye material which can be employed in short-wavelength optical recording media while being excellent in solubility to solvents. Also, an optical recording medium using this dye material and a method of manufacturing the same can be provided.

## Claims

1. A dye material containing a cyanine compound and an azo compound;
wherein the cyanine compound contains at least a compound represented by the following general formula (1);
wherein the azo compound contains at least a chelate compound of a compound represented by the following general formula (2) and a metal; and
wherein the cyanine compound is contained by 30 to 90 mass % of the total of the cyanine compound and azo compound: 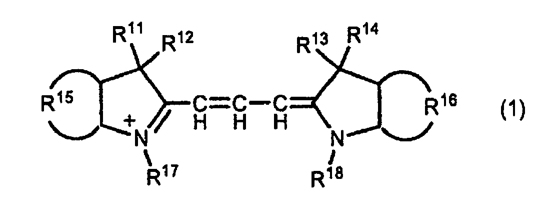
R²¹-N=N―R²² (2)
where, in the formula (1), R¹¹, R¹², R¹³, and R¹⁴ are each independently a group represented by the following general formula (3) or an alkyl group having a carbon number of 1 to 4; R¹⁵ and R¹⁶ are each independently an atom group constituting a benzene ring which may have a substituent or a naphthalene ring which may have a substituent; R¹⁷ and R¹⁸ are each independently an organic group having a carbon number of 1 to 30; at least one of R¹¹, R¹², R¹³, and R¹⁴ is a group represented by the following general formula (3); at least one of R¹⁷ and R¹⁸ is an organic group having a carbon number of 2 to 30; and carbons in at least one of a set of R¹¹ and R¹² and a set of R¹³ and R¹⁴ may be combined to each other so as to form a 3- to 6-membered ring: 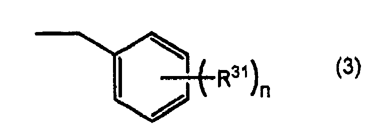 where, in the formula (3), R³¹ is a hydroxy group, a cyano group, a halogen atom, a nitro group, an alkyl group having a carbon number of 1 to 4, an alkoxy group having a carbon number of 1 to 4, or a halogen-substituted alkoxy group having a carbon number of 1 to 4; and n is an integer of 0 to 5; and, when n is 2 or greater, a plurality of R³¹ may be the same or different from each other; where, in the formula (2), R²¹ and R²² are each independently an aromatic ring which may have a substituent; and at least one of W²¹ and R²² is an aromatic ring having a substituent adapted to be coordinated to a metal atom or a nitrogen-containing heterocyclic aromatic ring having a nitrogen atom adapted to be coordinated to a metal atom.

2. A dye material according to claim 1, wherein, in the general formula (1), at least one of R¹⁷ and R¹⁸ is an isoamyl group, while the other is an alkyl group having a carbon number of 1 to 5.

3. A dye material according to claim 1, wherein the azo compound contains at least a chelate compound represented by the following general formula (4):

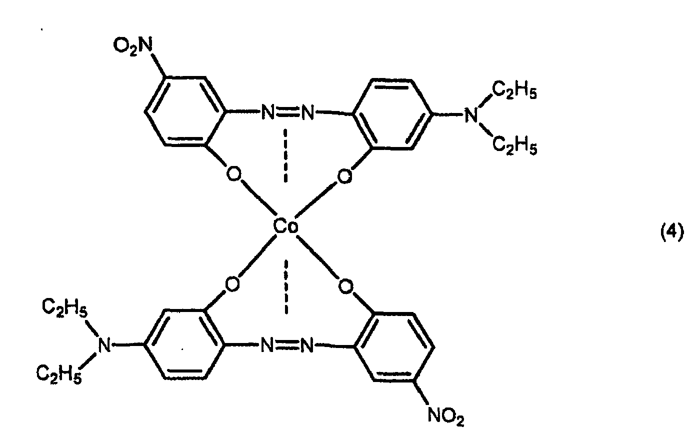

4. A dye material according to claim 1, wherein the cyanine compound contains at least a compound represented by the following general formula (5); and
wherein the azo compound contains at least a chelate compound represented by the following general formula (4): 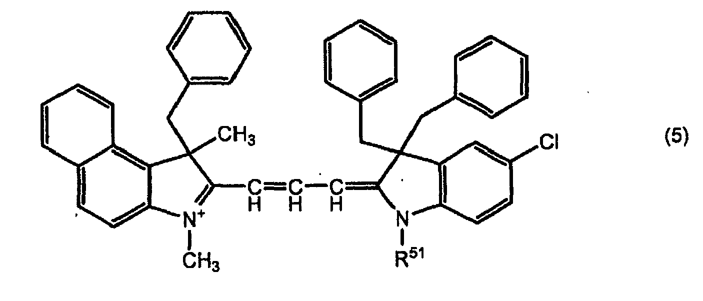 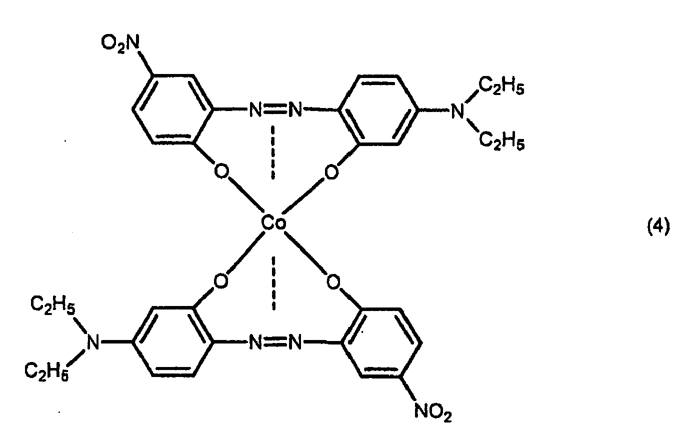 where R⁵¹ is a branched alkyl group having a carbon number of at least 4.

5. A dye material according to claim 4, wherein R⁵¹ in the general formula (5) is an isoamyl group.

6. A dye material according to claim 1, wherein 10 to 100 mass % of the cyanine compound is a compound represented by the general formula (1).

7. A method of manufacturing an optical recording medium, the method comprising the step of applying a coating liquid containing the dye material according to claim 1 and tetrafluoropropanol onto a substrate.

8. An optical recording medium comprising a substrate and a recording layer formed on the substrate;
wherein the recording layer contains the dye material according to claim 1.
